**Europäisches Patentamt**

**European Patent Office**

**Office européen des brevets**

(11) Veröffentlichungsnummer: **0 203 029**
**B1**

(12) **EUROPÄISCHE PATENTSCHRIFT**

(45) Veröffentlichungstag der Patentschrift:
**25.01.89**

(51) Int. Cl.⁴: **H02H 3/093**

(21) Anmeldenummer: **86730084.0**

(22) Anmeldetag: **16.05.86**

(54) **Verfahren zum Erzeugen eines Auslösesignals in Abhängigkeit von der Grösse und der Dauer eines Überstromes.**

(30) Priorität: **24.05.85 DE 3519262**

(43) Veröffentlichungstag der Anmeldung:
**26.11.86 Patentblatt 86/48**

(45) Bekanntmachung des Hinweises auf die Patenterteilung:
**25.01.89 Patentblatt 89/4**

(84) Benannte Vertragsstaaten:
**DE FR GB IT**

(56) Entgegenhaltungen:
**GB-A- 2 037 104**

(73) Patentinhaber: **Siemens Aktiengesellschaft Berlin und München, Wittelsbacherplatz 2, D-8000 München 2(DE)**

(72) Erfinder: **Kugler, Robert, Dr., Kellerstr. 40, D-8508 Wendelstein(DE)**
Erfinder: **Simmel, Hans-Eberhard, Dipl.-Ing, Piemontstr. 6, D-7500 Karlsruhe 31(DE)**

ACTORUM AG

**Beschreibung**

Die Erfindung bezieht sich auf ein Verfahren zum Erzeugen eines Auslösesignals in Abhängigkeit von der Größe und der Dauer eines Überstromes, bei dem eine aus dem Überstrom abgeleitete, gleichgerichtete Meßgröße abgetastet wird und die abgetasteten Meßwerte in entsprechende digitale Werte umgeformt werden, die digitalen Werte einer vorgegebenen Funktion entsprechend gewichtet und aufsummiert werden und bei einem oberhalb eines vorgegebenen Vergleichswertes liegenden Summenwert das Auslösesignal gebildet wird und die Aufsummierung vor Bildung des Auslösesignals unterbrochen wird, wenn der Überstrom für eine Zeit eine vorgegebene Schwelle unterschreitet.

Nach einem derartigen Verfahren arbeitet ein bekanntes Überwachungsgerät, das in der DE-OS 2 950 031 beschrieben ist. Bei diesem bekannten Überwachungsgerät wird nämlich eine durch Gleichrichtung aus dem zu überwachenden Strom gewonnene Meßgröße mittels einer Abtastschaltung abgetastet und die so gewonnenen Abtastwerte in einem A/D-Wandler in entsprechende digitale Werte umgeformt. Die digitalen Werte werden in einem Funktionsgenerator gewichtet und nach Wichtung in einer Summationsschaltung aufaddiert. Erreicht der Stand der Summationsschaltung einen vorgegebenen Vergleichswert, dann wird ein Auslösesignal erzeugt. Bei dem bekannten Überwachungsgerät ist an den A/D-Wandler eine Schaltungsbaugruppe angeschlossen, mit der ständig überprüft wird, ob der zu überwachende Strom Überstromwerte aufweist. Solange dies der Fall ist wird ein der Schaltungsbaugruppe nachgeordneter, taktgesteuerter Zähler ständig zurückgestellt. Bleibt das Rückstellsignal der Schaltungsbaugruppe aus, dann läuft der taktgesteuerte Zähler auf einen vorgegebenen Zählerstand auf und stellt dann die Summationsschaltung zurück. Damit dies nicht bereits jeweils dann geschieht, wenn aufgrund des Kurvenverlaufs der gleichgerichteten Meßgröße deren Momentanwerte unter einem einen Überstromwert kennzeichnenden Wert fallen, muß der vorgegebene Zählerstand bei dem bekannten Überwachungsgerät so bemessen sein, daß dieser Zählerstand erst nach einer Zeit erreichbar ist, die länger als die Dauer einer Halbschwingung des zu überwachenden Stromes ist. Dies kann dazu führen, daß im Einzelfalle noch eine Auslösung erfolgt, ohne daß dies erforderlich ist. In jedem Falle erfordert das nach dem geschildertern Verfahren arbeitende bekannte Überwachungsgerät für zu überwachende Ströme von 50 Hz oder 60 Hz unterschiedlich hinsichtlich des kritischen Zählerstandes eingestellte Zähler.

Der Erfindung liegt die Aufgabe zugrunde, ein Verfahren zum Erzeugen eines Auslösesignals in Abhängigkeit von der Größe und der Dauer eines Überstromes anzugeben, bei dem der Zeitpunkt des Abbruchs der Aufsummierung bei schwindendem Überstrom von dem Kurvenverlauf der Meßgröße abhängt und somit unabhängig von der Frequenz des jeweils auf Überstromwerte zu überwachenden Stromes etwa nach einer Halbschwingung des zu überwachenden Stromes erfolgt.

Zur Lösung dieser Aufgabe wird bei einem Verfahren der eingangs angegebenen Art erfindungsgemäß eine dem Differenzen- oder Differentialquotienten der gleichgerichteten Meßgröße entsprechende Hilfsgröße gebildet, und die Hilfsgröße auf ihr Vorzeichen untersucht und jeweils bei einer Änderung ihres Vorzeichens von positiv zu negativ der dann gerade vorliegende, abgetastete Maximalwert festgehalten und taktweise aufsummiert, bis sich das Vorzeichen erneut von positiv zu negativ ändert; der Absolutbetrag der Hilfsgröße wird mit einem vorgegebenen Grenzwert und jeder abgetastete Wert mit der vorgegebenen Schwelle des Überstromes verglichen, und bei einem unterhalb des vorgegebenen Grenzwertes liegenden Absolutbetrag der Hilfsgröße und einem unterhalb der vorgegebenen Schwelle liegenden abgetasteten Wert des Überstromes wird die Aufsummierung abgebrochen.

Ein wesentlicher Vorteil des erfindungsgemäßen Verfahrens besteht darin, daß ein nach diesem Verfahren arbeitendes Gerät unabhängig von der Frequenz eines auf Überstromwerte zu überwachenden Stromes ausgeführt werden kann, weil ein Abbruch der Aufsummierung bei sinkendem Überstrom nicht mittels eines bis zu einem vorgegebenen Zählerstand laufenden Zählers bewirkt ist, sondern aus einem Vergleich des Absolutbetrages der Hilfsgröße mit einem vorgegebenen Grenzwert und eines Vergleichs des abgetasteten Wertes des Überstromes mit einer vorgegebenen Schwelle gebildet ist. Ein weiterer Vorteil besteht darin, daß ein Abbruch der Aufsummierung stets in Abhängigkeit von dem tatsächlichen Verlauf der Meßgröße erfolgt.

Die Gewinnung der Hilfsgröße kann bei dem erfindungsgemäßen Verfahren in unterschiedlicher Weise erfolgen. Beispielsweise läßt sich die Hilfsgröße durch Differentiation der gleichgerichteten Meßgröße gewinnen. Im Hinblick auf eine möglichst einfache Durchführung des erfindungsgemäßen Verfahrens erscheint es jedoch vorteilhafter, wenn jeweils aufeinanderfolgende abgetastete Werte miteinander verglichen werden und daraus das Vorzeichen und der Absolutbetrag der Hilfsgröße ermittelt wird. Durch einfache Differenzbildung läßt sich nämlich dann die Hilfsgröße gewinnen.

Im Hinblick auf eine möglichst einfache und funktionssichere Durchführung des erfindungsgemäßen Verfahrens hat es sich ferner als vorteilhaft herausgestellt, wenn beim ersten Überschreiten der vorgegebenen Schwelle durch den zu überwachenden Strom, also beim Überstrom, ein Anregungssignal erzeugt wird, auf das hin der dabei abgetastete Wert festgehalten und die Aufsummierung von Null beginnend gestartet wird. Auf diese Weise sind nicht nur die Ausgangsbedingungen für die Aufsummierung exakt definierbar, sondern es ist auch sichergestellt, daß vom ersten Augenblick des Auftretens eines Überstromes an die jeweils dann abgetasteten Werte zur Aufsummierung mit herangezogen werden. Dadurch ist die Genauigkeit des erfindungsgemäßen Verfahrens sehr hoch.

Um in Erfüllung einer häufig gestellten Anforderung, nämlich eine kürzeste Auslösezeit nicht zu unterschreiten, das erfindungsgemäße Verfahren entsprechend zu gestalten, wird von dem Anregungssignal vorteilhafterweise ein Festzeit-Zähler gestartet, nach dessen Ablauf bei einem Erreichen des vorgegebenen Vergleichswertes bei der Aufsummierung das Auslösesignal erzeugt wird.

Ferner hat es sich als vorteilhaft erwiesen, wenn bei dem erfindungsgemäßen Verfahren auf das Anregungssignal hin jeweils eine vorgegebene Anzahl nacheinander aufgetretener, abgetasteter Werte gespeichert wird und wenn durch paarweise Differenzbildung der jeweils drei letzten gespeicherten, abgetasteten Werte eine Untersuchung auf das Auftreten eines Maximalwertes des Überstromes durchgeführt und ein ermittelter Maximalwert festgehalten wird. Durch die paarweise Differenzbildung der jeweils letzten drei gespeicherten, abgetasteten Werte läßt sich nämlich bei der praktischen Durchführung des erfindungsgemäßen Verfahrens ohne nennenswerten Aufwand feststellen, ob die eine Differenzbildung gerade ein positives und die andere Differenzbildung gerade ein negatives Vorzeichen ergibt; ist dies der Fall, dann kann ein Zwischenwert nur einen Maximalwert darstellen, der dann in einfacher Weise festgehalten und weiterverarbeitet werden kann.

Bei dem erfindungsgemäßen Verfahren hat es sich ferner als vorteilhaft herausgestellt, wenn das Anregungssignal zurückgenommen wird, wenn ein unterhalb der vorgegebenen Schwelle des Überstromes liegender Maximalwert auftritt und der Absolutbetrag der Hilfsgröße unter dem vorgegebenen Grenzwert liegt. Mit der Rücknahme des Anregungssignals kann beispielsweise die Wichtung und die Aufsummierung unterbrochen werden. Damit ist dann auch das Entstehen eines Auslösesignals verhindert.

Um auch in den relativ seltenen Fällen, in denen der Überstrom stetig gegen Null konvergiert, einen Abbruch der Aufsummierung zu erreichen, wird gemäß einer Weiterbildung des erfindungsgemäßen Verfahrens das Anregungssignal zurückgenommen, wenn die Addition der vorgegebenen Anzahl der gespeicherten, abgetasteten Werte unter einem vorgegebenen Mindestwert liegt. Durch die Zurücknahme des Anregungssignals wird auch in diesem Falle die Aufsummierung abgebrochen und dadurch das Entstehen eines Auslösesignals verhindert.

Zur Erläuterung der Erfindung ist in Figur 1 ein Diagramm mit einer aus dem zu überwachenden Strom gewonnenen, gleichgerichteten Meßgröße, in Figur 2 ein Flußdiagramm zur prinzipiellen Erläuterung des erfindungsgemäßen Verfahrens und in Figur 3 eine Schaltungsanordnung in Blockschaltdarstellung wiedergegeben, um das erfindungsgemäße Verfahren anschaulich erläutern zu können.

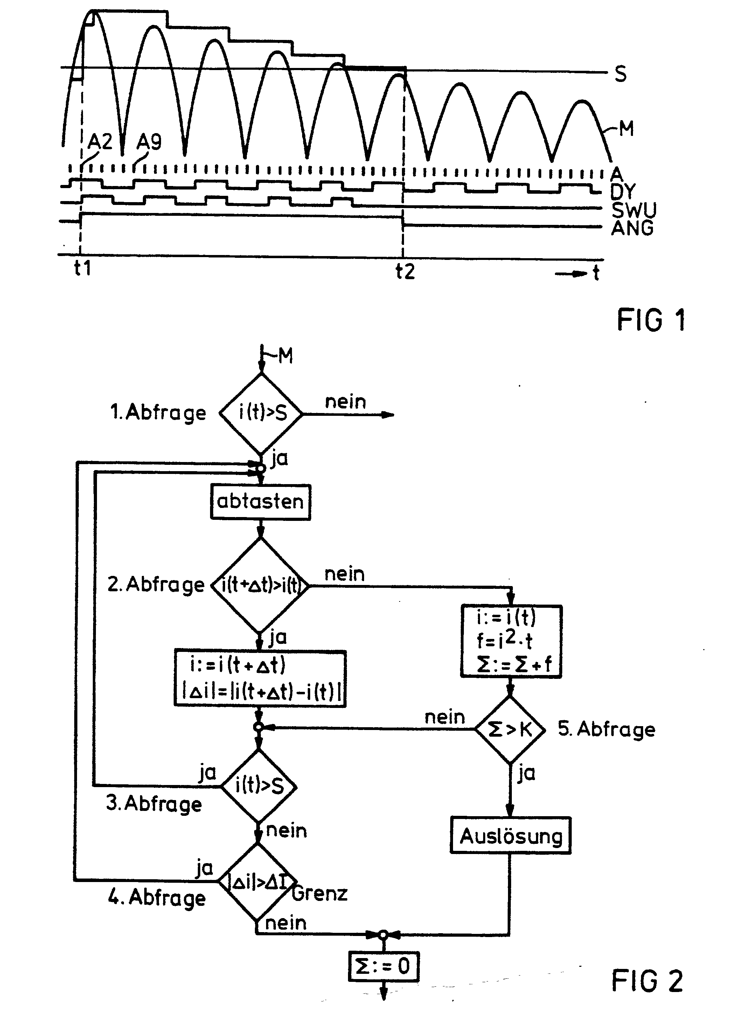

In Figur 1 ist u. a. eine Meßgröße M in ihrem Ablauf über der Zeit t dargestellt, wobei die Meßgröße M durch Gleichrichtung aus einem einphasigen, zu überwachenden Wechselstrom gebildet ist.

Die so gewonnene Meßgröße M wird – wie Figur 2 zeigt – in einer ersten Abfrage daraufhin untersucht, ob sie Momentanwerte aufweist, die oberhalb einer vorgegebenen Schwelle S liegen. Dies ist bei dem in Figur 1 dargestellten Kurvenverlauf der Meßgröße M beim zweiten Abtastsignal A2 der Fall. Deshalb wird die erste Abfrage des Flußdiagramms nach Figur 2 zu diesem Zeitpunkt mit "ja" beantwortet, und es setzt ein Abtasten weiterer Werte der Meßgröße M ein, wie dies aus der Figur 1 entnehmbar ist. Die abgetasteten Werte werden in einer zweiten Abfrage daraufhin überprüft, ob der Abtastwert $i(t + \Delta t) > i(t)$ ist, ob also der jeweils später abgetastete Wert größer als der vorangehende ist. Ist dies der Fall, dann wird der jeweils zuletzt abgetastete Momentanwert der Meßgröße M festgehalten und außerdem der Absolutbetrag der Differenz des zuletzt abgetasteten und des vorangehenden Momentanwertes, d. h. der Absolutbetrag der Hilfsgröße, gebildet.

Es wird darüberhinaus in einer 3. Abfrage überprüft, ob der abgetastete Momentanwert der Meßgröße M größer als die vorgegebene Schwelle S ist. Ist dies gegeben, dann wird die Abtastung fortgesetzt. Liegt der abgetastete Momentanwert unter der vorgegebenen Schwelle S, dann wird eine weitere (4.) Abfrage durchgeführt, in der überprüft wird, ob der Absolutbetrag der durch Differenzbildung gewonnenen Hilfsgröße größer als ein vorgegebener Grenzwert ist. Falls dies der Fall ist, wird die Abtastung fortgesetzt. Ist dies nicht der Fall, dann wird die Abtastung unterbrochen.

Ergibt die 2. Abfrage, daß ein zuletzt abgetasteter Momentanwert der Meßgröße M kleiner als der vorangehend abgetastete Momentanwert ist, dann wird der vorangehende Momentanwert festgehalten, gemäß einer Funktion $f = i^2 . t$ gewichtet und die gewichteten Digitalwerte aufsummiert. In einer weiteren (5.) Abfrage wird dann überprüft, ob die Aufsummierung einen vorgegebenen Vergleichswert K erreicht hat. Ist dies der Fall, dann wird ein Auslösesignal erzeugt. Anderenfalls wird die Aufsummierung fortgesetzt oder auch unterbrochen, ohne daß ein Auslösesignal ermittelt wird.

Nach erfolgter Auslösung wird die Summierung wieder auf Null zurückgeführt, was in der Regel beim Beginn eines neuen Überstromfalles geschieht.

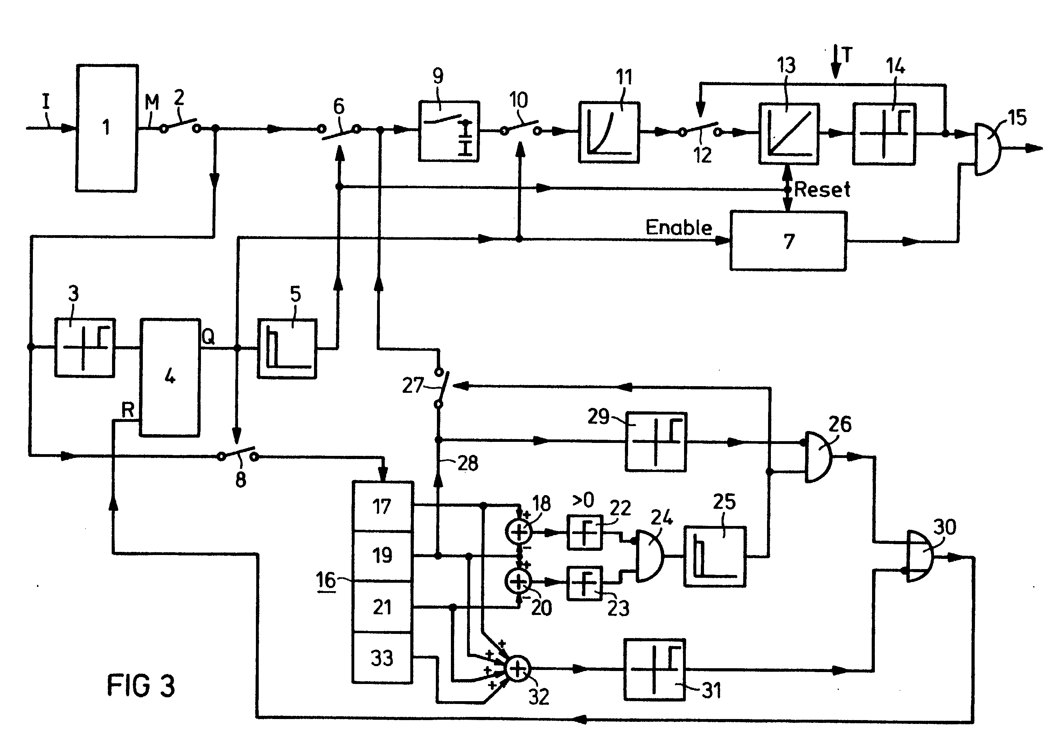

Das erfindungsgemäße Verfahren läßt sich in vorteilhafter Weise mittels eines Mikrocomputers durchführen; nur zur Erläuterung des Ablaufs des erfindungsgemäßen Verfahrens dient daher das Blockschaltbild nach Figur 3.

Der zu überwachende Wechselstrom J wird in einer Gleichrichterschaltung 1 gleichgerichtet und durch eine nur durch den Kontakt 2 schematisch dargestellte Abtasteinrichtung abgetastet. Sollen Ströme in einem Mehrphasensystem überwacht werden, dann wird in an sich bekannter Weise anstelle des Gleichrichters 1 ein Hüllkurvenbildner verwendet, der eingangsseitig mit aus den Strömen in allen Phasen gewonnenen Größen beaufschlagt ist. Die abgetasteten Werte der am Ausgang des Gleichrichters 1 anstehenden Meßgröße M gelangen nach A/D-Wandlung, die der Einfachheit halber in der Figur nicht dargestellt sind, zu einem Baustein 3, der eine Auslöseschwelle festlegt, die der vorgegebenen Schwelle S nach Figur 1 entspricht.

Dem Baustein 3 ist ein Anregungsmerker 4 nachgeordnet, der auf ein Ausgangssignal des Bausteines 3 hin an seinem Ausgang Q eine Potentialänderung erfährt. Diese Potentialänderung steuert eine monostabile Kippstufe 5, die daraufhin einen Kontakt 6 schließt. Außerdem wird durch die Potentialänderung am Ausgang Q des Anregungsmerkers 4 ein Enable-Signal an einen Festzeit-Zähler 7 gegeben. Vorher ist dieser Festzeit-Zähler 7 durch das Ausgangssignal der monostabilen Kippstufe 5 zurückgesetzt worden. Durch die Potentialänderung am Ausgang Q des Anregungsmerkers 4 wird außerdem ein zusätzlicher Kontakt 8 geschlossen.

Durch das Schließen des Kontaktes 6 ist der nach Auftreten eines Überstromwertes sich ergebende erste Abtastwert (beim Abtastsignal A2 nach Fig. 1) auf ein Halteglied 9 schaltbar und wird demzufolge in diesem Halteglied 9 gehalten. Über einen aufgrund der Potentialänderung am Ausgang Q des Anregungsmerkers 4 außerdem geschlossenen Kontakt 10 wird der festgehaltene Wert in einem Funktionsgenerator 11 einer vorgegebenen Funktion, insbesondere einer $i^2t$-Funktion, entsprechend gewichtet und der gewichtete Wert über einen mit einem Takt T gesteuerten Kontakt 12 in einen Integrator 13 gespeist. Diesem Integrator 13 ist ein Schwellenwertbaustein 14 nachgeordnet, in dem ein vorgegebener Vergleichswert gespeichert ist. Der Ausgang des Schwellenwertbausteines 14 ist an einen Eingang eines UND-Gliedes 15 angeschlossen, an dessen anderem Eingang der Ausgang des Festzeit-Zählers 7 liegt.

Mit den abgetasteten Momentanwerten der Meßgröße M ist über den Kontakt 8 ein Abtastwertespeicher 16 beaufschlagt, in dem eine vorgegebene Anzahl jeweils nacheinander auftretender abgetasteter Werte speicherbar ist. Bei dem dargestellten Ausführungsbeispiel lassen sich in den Abtastwertspeicher 16 vier nacheinander aufgetretene, abgetastete Werte speichern. Der Ausgang des ersten Speicherplatzes 17 ist mit einem Plus-Eingang eines Addierers 18 verbunden, dessen Minus-Eingang mit dem Ausgang eines weiteren Speicherplatzes 19 verbunden ist. Mit dem Ausgang dieses Speicherplatzes 19 ist ein Plus-Eingang eines weiteren Addierers 20 verbunden, dessen Minus-Eingang mit einem Ausgang eines weiteren Speicherplatzes 21 in Verbindung steht. Mit den Addierern 18 und 20 werden die jeweils aufeinander folgenden abgetasteten Werte paarweise unter Vornahme einer Subtraktion miteinander verglichen und bei Vorliegen einer vorgegebenen Differenz über Schwellenwertbausteine 22 und 23 Signale an ein weiteres UND-Glied 24 gegeben, dessen in der Figur oberer Eingang ein invertierender Eingang ist. Dem weiteren UND-Glied 24 ist eine monostabile Kippstufe 25 nachgeordnet, die ausgangsseitig sowohl mit einem Eingang eines zusätzlichen UND-Gliedes 26 als auch mit einem Kontakt 27 verbunden ist.

Der Speicherplatz 19 des Abtastwertspeichers 16 ist über eine Verbindungsleitung 28 mit dem Kontakt 27 verbunden, über den eine weitere Verbindung zu dem Halteglied 9 herstellbar ist, wenn der Kontakt 27 durch eine entsprechende Ausgangsgröße der monostabilen Kippstufe 25 betätigt ist. Außerdem ist die Verbindungsleitung 28 an den Eingang eines Schwellenwertbausteins 29 geführt, der auf die vorgegebene Schwelle S für den Auslösestrom eingestellt ist. Wird diese Schwelle S überschritten, dann entsteht am Ausgang des Bausteins 29 ein Signal, das am Eingang des zusätzlichen UND-Gliedes 26 invertiert wird.

Dem zusätzlichen UND-Glied 26 ist ein ODER-Glied 30 nachgeordnet, dessen anderer, invertierender Eingang am Ausgang eines zusätzlichen Schwellenwertbausteines 31 liegt. Dieser zusätzliche Schwellenwertbaustein 31 ist einem Addierer 32 nachgeordnet, der eingangsseitig sowohl mit den Speicherplätzen 17, 19 und 21 als auch mit einem vierten Speicherplatz 33 des Abtastwertespeichers 16 verbunden ist. Der Ausgang des ODER-Gliedes 30 ist mit einem Reset-Eingang R des Anregungsmerkers 4 verbunden.

Anhand der Schaltungsanordnung, wie sie in Figur 3 dargestellt ist, soll nun der Ablauf des erfindungsgemäßen Verfahrens erläutert werden:

Ein zu überwachender Wechselstrom J wird in dem Gleichrichter 1 gleichgerichtet und ergibt eine Meßgröße M, wie sie in Figur 1 in Abhängigkeit von der Zeit dargestellt ist. Die so gewonnene gleichgerichtete Meßgröße M wird impulsweise in einer Form abgetastet, wie dies in Figur 1 durch die Abtastsignale A dargestellt ist. Ergibt die Abtastung einen abgetasteten Wert, der oberhalb des vorgegebenen Schwellwertes S nach Figur 1 liegt, dann spricht der Schwellenwertbaustein 3 nach Figur 3 zum Zeitpunkt t2 an und am Ausgang des Anregungsmerkers 4 ergibt sich eine Potentialänderung, die u. a. zu einer Aktivierung des Festzeit-Zählers 7 und zu einem Schließen des Kontaktes 8 führt. Für eine vorgegebene Zeit wird durch das Ausgangssignal der monostabilen Kippstufe 5 der Kontakt 6 geschlossen und außerdem ein Rücksetzsignal an den Festzeit-Zähler 7 und an den Integrator 13 gegeben. Somit kann über den Kontakt 6 der erste, über der vorgegebenen Schwelle S liegende, mit dem Abtastsignal A2 abgetastete Wert in dem Halteglied 9 festgehalten werden. Dieser Wert wird, da außerdem der Kontakt 10 bei einer Potentialänderung am Ausgang Q des Anregungsmerkers 4 geschlossen ist, gewichtet und in einem vorgegebenen Takt im Integrator aufsummiert.

Beim folgenden Abtastsignal erreicht der Momentanwert der Meßgröße M nahezu den Scheitelwert; dieser Abtastwert wird über den Kontakt 8 im Speicherplatz 17 des Abtastwertespeichers 16 gespeichert. Er gelangt nicht sofort in das Halteglied 9, weil der Kontakt 6 inzwischen wieder geöffnet ist. Es werden nacheinander weitere abgetastete Werte in den Abtastwertespeicher 16 eingespeichert. Durch die Differenzbildung jeweils aufeinanderfolgend abgetasteter Abtastwerte durch die Addierer wird die Hilfsgröße $\Delta i$ gebildet, insbesondere deren Vorzeichen ermittelt, wie die Kurve DY in Fig. 1 zeigt. Außerdem wird ein Signal SWU mittels des Schwellenwertbausteins 29 erzeugt, wie es ebenfalls in Fig. 1 dargestellt ist. Dieses Signal SWU kennzeichnet die Unterschreitungen der vorgegebenen Schwelle S. Sind die ersten drei Speicherplätze 17, 19 und 21 belegt, dann wird mittels der Addierer 18 und 20 ferner festgestellt, ob ein Maximalwert gespeichert ist. Ist im Speicherplatz 19 ein derartiger Maximalwert vorhanden (dies ist der Fall, wenn der Addierer 18 eine Größe mit positivem Wert und der Addierer 20 eine Größe mit negativem Vorzeichen erzeugt), dann wird er über den dann geschlossenen Kontakt 27 dem Halteglied 9 zugeführt und dort festgehalten. Es erfolgt nunmehr eine Wichtung dieses festgehaltenen Wertes und eine Aufsummierung der gewichteten Werte in dem vorgegebenen Takt T im Integrator 13. Die Aufsummierung auf der Basis des ermittelten Maximalwertes erfolgt so lange, bis die Addierer 18 und 20 Ausgangsgrößen mit dem oben beschriebenen Vorzeichenverhältnis wiederum aufweisen. Dies ist beim Abtastsignal A9 gegeben. In diesem Falle wird dann nämlich kurzzeitig wiederum über die monostabile Kippstufe 25 der Kontakt 27 geschlossen und der dann im Speicherplatz 19 vorhandene Maximalwert dem Halteglied 9 zugeführt und dort festgehalten. Es erfolgt dann wiederum eine Wichtung dieses (geringeren) Maximalwertes und eine taktmäßige Aufsummierung im Integrator 13. Dies geschieht mit weiteren Maximalwerten bis zum Zeitpunkt t2 (vgl. Figur 1), weil zu diesem Zeitpunkt ein abgetasteter Wert ermittelt wird, der kleiner als die vorgegebene Schwelle S ist, und außerdem mittels der Addierer 18 und 20 angezeigt wird, daß die Differenz zwischen jeweils benachbarten abgetasteten Werten relativ groß, also der Differentialquotient relativ groß ist. In diesem Falle wird nämlich der Kontakt 27 nicht mehr betätigt, so daß ein unterhalb der vorgegebenen Schwelle S liegender Maximalwert nicht mehr in das Halteglied 9 eingespeichert wird.

Durch die Ausgänge des Schwellenwertbausteins 29 und der weiteren monostabilen Kippstufe 25 wird nunmehr das zusätzliche UND-Glied 26 so beaufschlagt, daß an diesem ein Ausgangssignal auftritt, wodurch über das ODER-Glied 30 der Anregungsmerker 4 an seinem Reset-Eingang R beaufschlagt wird. Daraufhin wird über eine Signaländerung am Ausgang Q des Anregungsmerkers 4 der Kontakt 8 wieder geöffnet, so daß keine Abspeicherung weiterer Abtastwerte erfolgen kann. Außerdem wird der Kontakt 10 geöffnet und damit der Integrator 13 vom Halteglied 9 abgetrennt, wodurch die Aufsummierung unterbrochen wird. Der Integrator 13 erreicht demzufolge den vorgegebenen Vergleichswert, wie er vom Schwellenwertbaustein 14 vorgegeben ist, und es wird am Ausgang des UND-Gliedes 15 auch kein Auslösesignal erzeugt.

Andere Verhältnisse ergeben sich hingegen, wenn - was in Figur 1 nicht dargestellt ist - die Meßgröße M längere Zeit Werte oberhalb der vorgegebenen Schwelle S aufweist. In diesem Falle wird nämlich die Anregung nicht schon dann über das Ausgangssignal des ODER-Gliedes 30 zurückgenommen, bevor der Integrator 13 dem vorgegebenen Vergleichswert erreicht hat, sondern der Integrator 13 kann bis zu diesem vorgegebenen Vergleichswert aufsummieren, woraufhin dann der Schwellenwertbaustein 14 anspricht und an seinem Ausgang ein Signal an das nachgeordnete UND-Glied abgibt. Sofern der Festzeit-Zähler dann bereits abgelaufen ist, was in der Regel nach 300 ms der Fall ist, tritt am Ausgang des UND-Gliedes 15 ein Auslösesignal auf.

Anzumerken ist noch, daß unter Umständen der Verlauf der Meßgröße M dergestalt sein kann, daß diese stetig gegen Null konvergiert, also keine ausgeprägten Maximalwerte aufweist. Um auch in einem solchen Falle ein Auslösesignal zu verhindern zu können, werden in dem Addierer 32 gemäß dem Blockschaltbild nach Figur 3 die gespeicherten Werte aller Speicherplätze 17, 19, 21 und 33 addiert und beim Überschreiten eines vorgegebenen Wertes wird vom Schwellenwertbaustein 31 ein Signal abgegeben, das nach Invertierung zu einem Ausgangssignal 30 am ODER-Glied 30 führt, woraufhin dann auch in diesem Falle der Anregungsmerker 4 zurückgesetzt wird. Ein Fehlauslösen ist dann auch in diesem Falle verhindert.

**Patentansprüche**

1. Verfahren zum Erzeugen eines Auslösesignals in Abhängigkeit von der Größe und der Dauer eines Überstromes, bei dem

   a) eine aus dem Überstrom abgeleitete, gleichgerichtete Meßgröße (M) abgetastet wird und die abgetasteten Meßwerte in entsprechende digitale Werte umgeformt werden,

   b) die digitalen Werte einer vorgegebenen Funktion entsprechend gewichtet und aufsummiert werden und bei einem oberhalb eines vorgegebenen Vergleichswertes liegenden Summenwert das Auslösesignal gebildet wird und

   c) die Aufsummierung vor Bildung des Auslösesignals unterbrochen wird, wenn der Überstrom für eine Zeit eine vorgegebene Schwelle (S) unterschreitet, dadurch gekennzeichnet, daß

   d) eine dem Differenzen- oder Differentialquotienten der gleichgerichteten Meßgröße (M) entsprechende Hilfsgröße ($\Delta i$) gebildet wird, daß

   e) die Hilfsgröße ($\Delta i$) auf ihr Vorzeichen untersucht und jeweils bei einer Änderung ihres Vorzeichens von positiv zu negativ der dann gerade vorliegende, abgetastete Maximalwert festgehalten und taktweise aufsummiert wird, bis sich das Vorzeichen erneut von positiv zu negativ ändert, daß

   f) der Absolutbetrag der Hilfsgröße ($\Delta i$) mit einem vorgegebenen Grenzwert und jeder abgetastete Wert mit der vorgegebenen Schwelle (S) des Überstromes verglichen wird und daß

   g) bei einem unterhalb des vorgegebenen Grenzwertes liegenden Absolutbetrag der Hilfsgröße ($\Delta i$) und einem unterhalb der vorgegebenen Schwelle (S) liegenden abgetasteten Wert des Überstromes die Aufsummierung abgebrochen wird.

2. Verfahren nach Anspruch 1, dadurch gekennzeichnet, daß

   h) jeweils aufeinanderfolgende abgetastete Werte miteinander verglichen werden und

   h1) daraus das Vorzeichen und der Absolutbetrag der Hilfsgröße ($\Delta i$) ermittelt werden.

3. Verfahren nach Anspruch 1 oder 2, dadurch gekennzeichnet, daß

3. Verfahren nach Anspruch 1 oder 2, dadurch gekennzeichnet, daß

j) beim ersten Überschreiten der vorgegebenen Schwelle (S) durch den Überstrom ein Anregungssignal erzeugt wird, auf das hin

j1) der dabei abgetastete Wert festgehalten und j2) die Aufsummierung von Null beginnend gestartet wird.

4. Verfahren nach Anspruch 3, dadurch gekennzeichnet, daß

k) von dem Anregungssignal ein Festzeit-Zähler (7) gestartet wird, nach dessen Ablauf bei einem Erreichen des vorgegebenen Vergleichswertes bei der Aufsummierung das Auslösesignal erzeugt wird.

5. Verfahren nach Anspruch 3 oder 4, dadurch gekennzeichnet, daß

l) auf das Anregungssignal hin jeweils eine vorgegebene Anzahl nacheinander aufgetretener, abgetasteter Werte gespeichert wird und daß

m) durch paarweise Differenzbildung der jeweils drei letzten gespeicherten, abgetasteten Werte eine Untersuchung auf das Auftreten eines Maximalwertes des Überstromes durchgeführt wird und ein ermittelter Maximalwert festgehalten wird.

6. Verfahren nach einem der Ansprüche 3 bis 5, dadurch gekennzeichnet, daß

n) das Anregungssignal zurückgenommen wird, wenn ein unterhalb der vorgegebenen Schwelle (S) des Überstromes liegender Maximalwert auftritt und der Absolutbetrag der Hilfsgröße ($\Delta$ i) unter dem vorgegebenen Grenzwert liegt.

7. Verfahren nach Anspruch 6, dadurch gekennzeichnet, daß

o) das Anregungssignal zurückgenommen wird, wenn die Addition der vorgegebenen Anzahl der gespeicherten, abgetasteten Werte unter einem vorgegebenen Mindestwert liegt.

## Claims

1. Method for producing a tripping signal as a function of the magnitude and the duration of an overcurrent, wherein

a) a rectified measured magnitude (M) derived from the overcurrent is sampled and the sampled measured values are converted into corresponding digital values,

b) the digital values are weighted in accordance with a preset function and summed-up and in the case of a summation value lying above a preset comparison value the tripping signal is formed and

c) the summing-up is interrupted before the tripping signal is formed if the overcurrent falls, for a time, below a preset threshold (S), characterised in that

d) an auxiliary magnitude ($\Delta$ i) corresponding to the difference or differential quotients of the rectified measured magnitude (M) is formed, in that

e) the auxiliary magnitude ($\Delta$ i) is investigated for its sign and, in each case, in the event of a change of its sign from positive to negative the sampled maximum value then just present is retained and summed-up in clock pulses until the sign changes anew from positive to negative, in that

f) the absolute value of the auxiliary magnitude ($\Delta$ i) is compared with a preset limiting value and each sampled value is compared with the preset threshold (S) of the overcurrent, and in that

g) in the event of an absolute value of the auxiliary magnitude ($\Delta$ i) lying below the preset limiting value and a sampled value of the overcurrent lying below the preset threshold (S) the summing-up is aborted.

2. Method according to claim 1, characterised in that

h) succeeding sampled values in each case are compared one with another and

h1) the sign and the absolute value of the auxiliary magnitude ($\Delta$ i) are determined therefrom.

3. Method according to claim 1 or 2, characterised in that

j) when the preset threshold (S) is first crossed by the overcurrent there is produced an excitation signal, in consequence of which

j1) the value thereby sampled is retained and j2) the summing-up commencing from zero is started.

4. Method according to claim 3, characterised in that

k) a fixed-time counter (7) is started by the excitation signal, after the run of which counter when the preset comparison value is reached, when summing up, the tripping signal is produced.

5. Method according to claim 3 or 4, characterised in that

l) in consequence of the excitation signal, in each case, a preset number of sampled values occurring successively is stored and in that

m) through subtraction in pairs of the, in each case, three last stored sampled values an investigation is carried out into the occurrence of a maximum value of the overcurrent and determined maximum value is retained.

6. Method according to one of the claims 3 to 5, characterised in that

n) the excitation signal is cancelled if a maximum value lying below the preset threshold (S) of the overcurrent occurs and the absolute value of the auxiliary magnitude ($\Delta$ i) lies below the preset limiting value.

7. Method according to claim 6, characterised in that

o) the excitation signal is cancelled if the addition of the preset number of stored, sampled values lies below a preset minimum value.

## Revendications

1. Procédé pour produire un signal de déclenchement en fonction de l'intensité et de la durée d'une surintensité, et selon lequel:

a) une grandeur de mesure (M) dérivée de la surintensité et redressée est échantillonnée et les valeurs de mesure échantillonnées sont converties en valeurs numériques correspondantes,

b) des valeurs numériques d'une fonction prédéterminée sont pondérées de façon correspondantes et sommées et le signal de déclenchement est formé dans le cas où la valeur somme est supérieure à une valeur de référence prédéterminée, et

c) la sommation est interrompue avant la formation du signal de déclenchement lorsque la surintensité tombe, pendant un certain intervalle de temps, au-dessous d'un seuil (S) prédéterminé, caractérisé par le fait que

d) une grandeur auxiliaire ($\Delta$ i) correspondant au quotient de différence ou quotient différentiel de la grandeur de mesure (M) redressée est formée, que

e) le signe de la grandeur auxiliaire ($\Delta$ i) est examiné et, respectivement lors d'une modification de ce signe de la valeur positive à la valeur négative, la valeur maximale échantillonnée, qui est alors respectivement présente, est retenue et est sommée de façon cadencée jusqu'à ce que le signe passe à nouveau de la valeur positive à la valeur négative, que

f) la valeur absolue de la grandeur auxiliaire ($\Delta$ i) est comparée à une valeur limite prédéterminée, et chaque valeur explorée est comparée au seuil prédéterminé (S) de la surintensité, et que

g) dans le cas où la valeur absolue de la grandeur auxiliaire ($\Delta$ i) est inférieure à la valeur limite prédéterminée et où la valeur échantillonnée de la surintensité est inférieure au seuil prédéterminé (S), la sommation est interrompue.

2. Procédé suivant la revendication 1, caractérisé par le fait que

h) des valeurs respectives échantillonnées successives sont comparées entre elles, et

h1) à partir de là, le signe et la valeur absolue de la grandeur auxiliaire ($\Delta$ i) sont déterminés.

3. Procédé selon la revendication 1 ou 2, caractérisé en ce que

j) lors du premier dépassement du seuil prédéterminé (S) par la surintensité, un signal d'excitation est produit et lors de l'apparition de ce signal

j1) la valeur alors échantillonnée est conservée, et

j2) la sommation est déclenchée à partir de zéro.

4. Procédé suivant la revendication 3, caractérisé par le fait que

k) un compteur de durée fixe (7) est mis en marche par le signal d'excitation et après fonctionnement de ce compteur, lorsqu'est atteinte la valeur de référence prédéterminée lors de la sommation, le siganl de déclenchement est produit.

5. Procédé suivant la revendication 3 ou 4, caractérisé par le fait que

l) lors de l'apparition du signal d'excitation, un nombre prédéterminé de valeurs échantillonnées apparues successivement est respectivement mémorisé, et que

m) un contrôle de l'apparition d'une valeur maximale de la surintensité est exécuté au moyen de la formation de la différence, par couples, des trois dernières valeurs respectives échantillonnées et mémorisées, et une valeur maximale déterminée est retenue.

6. Procédé suivant l'une des revendications 3 à 5, caractérisé par le fait que

n) le signal d'excitation est supprimé lorsqu'il apparaît une valeur maximale inférieure au seuil prédéterminé (S) de la surintensité et que la valeur absolue de la grandeur auxiliaire ($\Delta$ i) est inférieure à la valeur limite prédéterminée.

7. Procédé suivant la revendication 6, caractérisé par le fait que

o) le signal d'excitation est supprimé lorsque la sommation du nombre prédéterminé des valeurs échantillonnées et mémorisées est inférieure à une valeur minimale prédéterminée.

FIG 1

FIG 2

FIG 3